# EUROPEAN PATENT SPECIFICATION

(11) **EP 3 919 357 B1**
(45) Date of publication and mention of the grant of the patent: **02.10.2024**
(21) Application number: 21175557.4
(22) Date of filing: 24.05.2021
(51) Int. Cl.: B62J 11/04, B62J 43/13, B62J 43/23, B62M 6/90

(54) **BOTTLE HOLDER FOR EXTERNAL BATTERY**
FLASCHENHALTER FÜR EXTERNE BATTERIE
PORTE-BOUTEILLE POUR BATTERIE EXTERNE

(30) Priority: 04.06.2020 ES 202031151 U
(43) Date of publication of application: 08.12.2021
(73) Proprietor: ORBEA, S. COOP., 48269 Mallabia (BIZKAIA) (ES)
(72) Inventor: NARBAIZA GÓMEZ, Xabier, 48269 Mallabia (ES); AUZMENDI ARKARAZO, Beñat, 48269 Mallabia (ES)
(74) Representative: Cueto, Sénida

(56) References cited:
- DE-U1- 202015 000 270
- TW-U- M 332 055
- TW-U- M 477 422
- US-A- 5 426 570
- US-A1- 2005 039 963

## Description

### Field of the invention

The invention is part of the field of electric bicycles, specifically accessories for electric bicycles, and refers to a bottle holder for external batteries, more precisely to a system consisting of a bottle holder, a water bottle and an external battery with a non-circular section larger than a section of the water bottle.

### Prior art

Currently, the use of electric bicycles has increased. These types of bicycles are similar to traditional bicycles, but they include an electric motor that helps with pedalling at certain times. This help that the cyclist gets from the motor is called assisted pedalling. In addition, an electric bicycle is simple to use, as the motor is turned on with a key and it is only necessary to pedal in order to keep it running. The advantage of these electric bicycles lies in the assistance with pedalling on mountainous terrain or steep slopes.

The motor of most electric bicycles is powered by a rechargeable battery whose legal power ranges between 250 and 350 watts. Normally, batteries have a life of about two years and a range of between 25 and 70 kilometres, depending on the model. Therefore, it is recommended that the battery be charged after each use, and as a result, it is necessary that the batteries should be able to be removed from the bicycle or charged on the bicycle using a charger, connected to the electrical network. The batteries have different capacities depending on the autonomy of the electric bicycle, and therefore they also have different weights, materials and shapes.

Generally, the motor and a main battery are housed inside the down tube, or are sometimes located in the top or bottom tube of the electric bicycle frame. In both cases, the outside of the down tube remains free for a bottle holder. However, on e-bikes for long mountain bike rides, a single battery may not be enough. For this reason, these long-distance electric bicycles usually comprise a central motor and two batteries, an internal main battery and an external additional battery. The main battery is attached or inserted into the tubes of the bicycle frame together with the motor, while the external additional battery can optionally be attached to the down tube of the bicycle frame with an external fastening system. One disadvantage of long-distance electric bikes is the weight that the two batteries add to the bike, and the fact that you must move with the strength of your legs when assisted pedalling is not used.

Another disadvantage of bicycles with an additional external battery is that in addition to the motor and batteries there are other elements such as the seat post or elements of the suspension system that take up space and restrict the design. For this reason, these types of bicycles usually present limitations on the location of the external battery, due to the aforementioned shortage of space for the integration of components. One possible solution is to position the external battery in the space where the water bottle, a common accessory in this type of bicycle, usually goes.

As mentioned above, depending on the duration of the ride, the user may need the external battery for long routes on steep terrain. In this case, you need to remove the bottle holder and attach a holder for the external battery. If, on the other hand, the route is short or the terrain is easy, it is better to remove the external battery because it saves considerable weight and you can also use the bottle holder for a water bottle.

The main problem is that the exchange between the external battery and the water bottle may not be easy or quick. Some known solutions use one holder for the external battery and a different holder for the water bottle, the assembly and disassembly of both holders being necessary to exchange the external battery and the water bottle, with the consequent increase in time to carry out the exchange. Other solutions for exchanging the external battery and the water bottle include an additional adapter that is placed onto the bottle holder, which allows it to be attached to the battery holder.

Lastly, at best, the external battery may be small and fit into the standard bottle holder. However, these solutions, which use several additional supports or adapter parts, mean an inconvenient increase in weight for sports activities carried out with this type of bicycle. Some solutions simply consist of using the standard bottle holder to locate the external battery, and although this solution is simple, it is only valid when the external battery is small and therefore of limited capacity, since the battery must fit into the bottle holder.

Document US2005/0039963A1 discloses a system according to the preamble of claim 1. Document US5426570A discloses an illumination system for a mountain bicycle.

In any case, these alternatives for mounting the external battery have some disadvantages, such as the loss of time to carry out the exchange, the complexity of the changeover, the increase in weight of the bicycle or the limitation of the battery capacity that can be incorporated.

The object of this invention is a bottle holder that makes it possible to house an external battery and exchange the water bottle for the external battery easily. Additionally, the holder of the invention minimizes some of the aforementioned limitations, in relation to existing solutions, with respect to exchange time, battery size limitation and/or weight increase.

### Brief description of the invention

The object of the invention is a system consisting of a bottle holder, a water bottle and an external battery with a non-circular section larger than a section of the water bottle as defined in claim 1. Preferred embodiments of the invention are set out in the dependent claims.

The holder comprises a longitudinal base designed to be fitted to a tube of the frame of an electric bicycle, generally on the down tube of the frame of an electric bicycle. Furthermore, the bottle holder also comprises a main body attached to the base, where the base and the main body partially form a cavity intended to house an external battery or a water bottle.

The main body is capable of adapting the size of the cavity in such a way as to accommodate the external battery with a non-circular section and greater than the water bottle section, and furthermore, the main body comprises an adjustment mechanism for closing the holder and preventing the external battery from moving around inside the holder. In this way, the invention allows the user to be able to house an external battery or a water bottle using one single holder.

At the same time, a space between the main body and the water bottle is delimited in the cavity of the bottle holder when the water bottle is inserted into the cavity of the holder. However, the cavity space is at least partially occupied by the external battery when the external battery is inserted into the cavity of the holder.

The configuration of the holder and the adjustment mechanism allows the size of the holder cavity to be adjusted according to the element to be inserted into the cavity, allowing the bottle holder to house a larger battery with a non-circular section, therefore giving greater autonomy than existing ones, simplifying the process of changing holders and adapting the electric bicycle to the desired route.

Before starting the route, the holder must be adjusted using the main body and the adjustment mechanism to prevent the external battery from falling out of the holder during the ride. In other words, the main body allows the cavity to be adapted to insert the external battery or the water bottle and subsequently, once the external battery or the water bottle is inserted, the adjustment mechanism exerts a compression force to adjust the size of the cavity of the holder to the size of the external battery. In this way, the holder is able to prevent the external battery or the water bottle from moving or coming out of the holder, by means of a quick, easy adjustment.

For all the above reasons, it is considered that the solution of the invention is advantageous compared to the previously described solutions, with the bottle holder and the external battery being a quick and simple solution without the need for tools to exchange the water bottle for the external battery.

### Brief description of drawings

The details of the invention are shown in the following figures:
Figure 1 shows a perspective of an embodiment of the holder and external battery together according to the invention.
Figure 2 shows a perspective of the holder in Figure 1.
Figure 3 shows an elevation view of the holder in Figure 1.
Figure 4 shows a profile view of the holder in Figure 1.
Figure 5 shows perspective views of the holder in Figure 1 with a water bottle (on the left) and an external battery (on the right) compatible with the holder of the invention.
Figure 6 shows views from below of the holder in Figure 1 with a water bottle (on the left) and an external battery (on the right) compatible with the holder of the invention.
Figure 7 shows a perspective of the internal configuration of the external battery in Figure 1.
Figure 8 shows the cell configuration of the external battery in Figure 7.
Figure 9 shows an elevation view of an embodiment of the external battery compatible with the holder of the invention in Figure 1.

### Detailed description of the invention

The invention relates to a bottle holder (1) for an external battery (4) intended to be placed on the frame of an electric bicycle. Specifically, on the down tube of the electric bicycle frame. This bottle holder (1) includes the capacity to house a water bottle (7) or an external battery (4) compatible with the holder (1) of the invention.

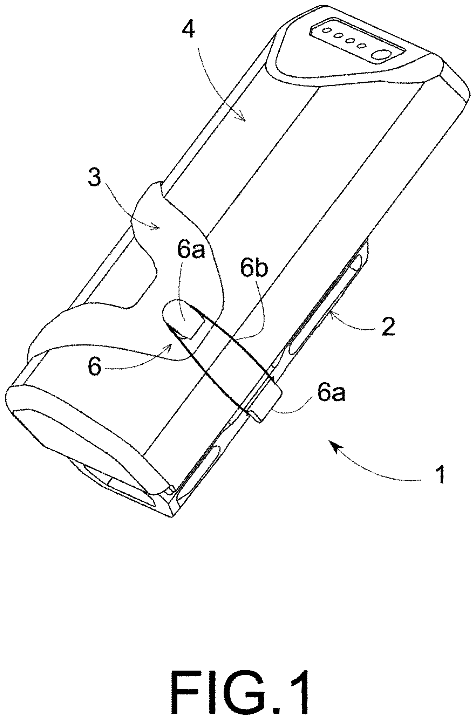

The illustration in Figure 1 shows a perspective of the holder (1) with the battery (4) inserted in the holder (1). As can be seen, the holder (1) comprises a longitudinal base (2), which is designed to be fixed to the down tube of the frame of an electric bicycle and a main body (3) attached to the base (2), which surrounds the external battery (4). Therefore, the base (2) and the main body (3) partially form a cavity (5) intended to house an external battery (4) or a water bottle (7).

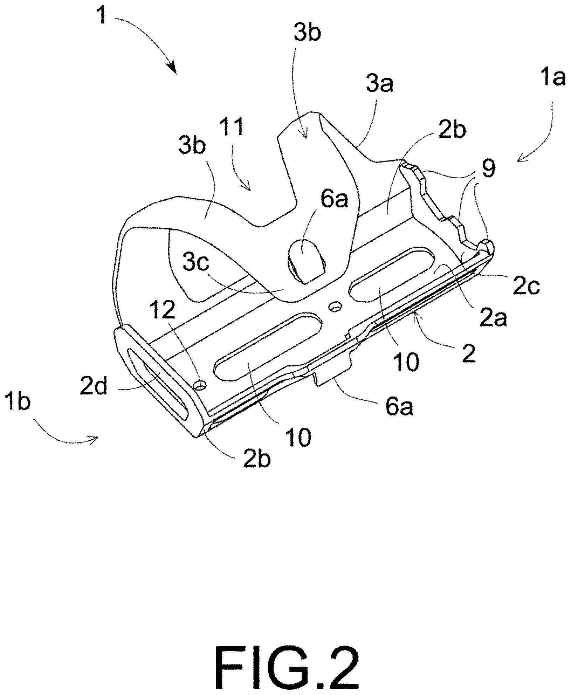

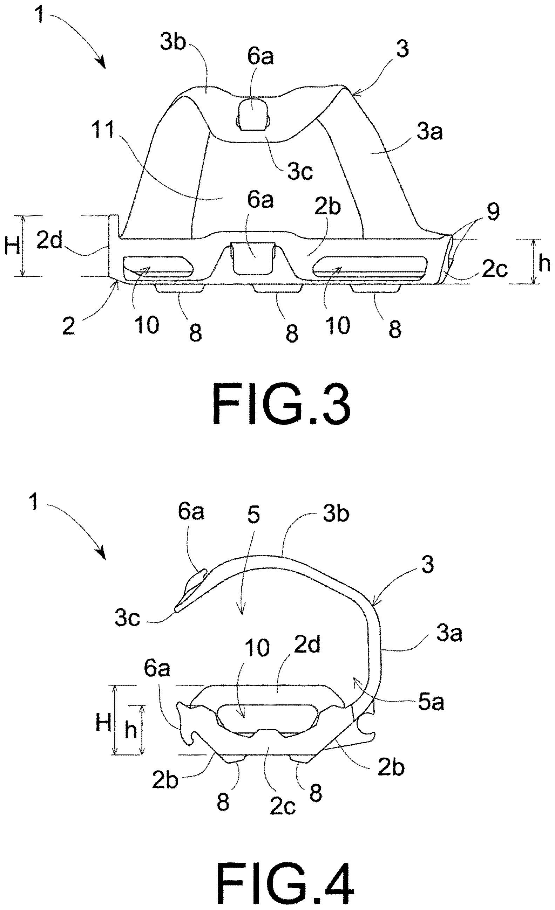

On the one hand, the base (2) of the holder (1) is a longitudinal body comprising a flat surface (2a), at least one inclined side surface (2b), an upper surface (2c) and a lower surface (2d). The inclined surface (2b) extends from each side of the flat surface (2a), while the upper surface (2c) extends perpendicularly from the surfaces (2a, 2b) at an upper end (1a) of the holder (1) and the lower surface (2d) that extends perpendicularly from the surfaces (2a, 2b) at a lower end (1b) of the holder (1), as can be seen in Figure 2. The upper surface (2c) comprises an upper height (h) smaller than a lower height (H) of the lower surface (2d) shown in Figures 3 and 4. In this way, the lower surface (2d) is intended to be the lower stop on which the external battery (4) or the water bottle (7) rests, while the upper surface (2c) is intended to hold the external battery (4) or the water bottle (7). On the other hand, Figures 2 to 4, also show the main body (3) of the holder (1), which is a partly circular body that extends from the inclined surface (2b) of the base (2) on a partly vertical surface (3a) to a free end (3c) at the end of a curved surface (3b). In Figures 2 to 4, it can also be seen that the cavity (5) is partially delimited by the base (2) and the main body (3), where the free end (3c) of the main body (3) is located over the inclined surface (2b) opposite the beginning of the main body (3).

The holder (1) comprises an adjustment mechanism (6) to increase or decrease the size of the cavity (5), so as to allow it to house an external battery (4) with a non-circular section which is larger than the section of the water bottle (7) or can be adjusted to the section of the water bottle (7). The adjustment mechanism (6) comprises at least one flange (6a) on the base (2), at least one flange (6a) on the main body (3) and an elastic element (6b), as shown in Figure 1. Specifically, the flanges (6a) are located on the free end (3c) of the main body (3) and on the inclined surface (2b) under the free end (3c). While the elastic element (6b) is placed around the flanges (6a), allowing the size of the cavity (5) to be adjusted.

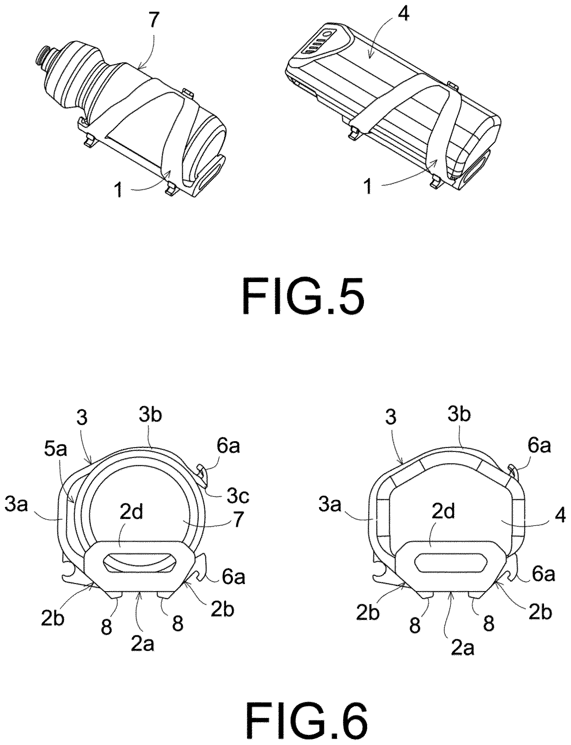

In addition, the cavity (5) comprises a space (5a) delimited between the main body (3) and the water bottle (7) when the water bottle (7) is inserted into the cavity (5) of the holder (1), while the space (5a) is at least partly occupied by the external battery (4) when the external battery (4) is inserted into the cavity (5) as shown in Figure 6.

In other words, the adjustment mechanism (6) allows the cavity (5) to be adjusted when the external battery (4) is inserted, and subsequently, once the external battery (4) has been inserted, the elastic element (6b) of the adjustment mechanism (6) exerts a compression force on the flanges (6a), specifically, the elastic element (6b) aims to bring the flange (6a) of the free end (3c) of the main body (3) closer to the flange (6a) of the inclined surface (2b) of the base (2). In this way, the adjustment mechanism (6) is able to adjust the size of the cavity (5) of the holder (1) to the size of the external battery (4). Meanwhile, the main body (3) of the holder (1) allows the cavity (5) to be enlarged to put the water bottle (7) inside. In other words, the curved surface (3b) and the free end (3c) of the main body (3) are able to move away partially from the base (2) so that the water bottle (7) can be inserted into the holder (1). Once the water bottle (7) has been introduced into the cavity (5), it is held by the compression force exerted by the main body (3) on the water bottle (7) due to the fact that the curved surface (3b) and the free end (3c) tend to return to the initial position. In this way, the holder (1) is able to prevent the external battery (4) or the water bottle (7) from moving or coming out of the holder (1), by means of a quick, easy adjustment.

Optionally, the holder (1) also comprises at least one protrusion (9) on a free end of the surface of the upper surface (2c) as shown in Figures 2 and 4. Preferably, the holder (1) comprises three protrusions (9) destined to restrict the longitudinal movement of the external battery (4) or the water bottle (7).

Figures 3 and 4 show that the flat surface (2a) of the base (2) comprises projections (8) along an entire lower area of the flat surface (2a) intended to be used as supports. Specifically, as seen in the Figures, the holder (1) comprises two rows with three projections (8) each, where each row of projections (8) is intended to serve as support on each side of the tube of the bicycle frame, keeping the holder (1) parallel to the tube of the electric bicycle. Furthermore, the holder (1) comprises at least one hole (12) in the flat surface (2a) intended to house at least one screw to fix the holder (1) in a fixed position on the tube of the electric bicycle frame.

Optionally, in Figure 2 it is observed that the holder (1) comprises at least one space (10) in at least one surface of the base (2). Specifically, the flat surface (2a) and the inclined surfaces (2b) comprise two spaces (10) and the lower surface (2d), defined as a stop, comprises one space (10). In addition, in the embodiment of the figures, the main body (3) comprises at least one gap (11) that extends from the partly vertical surface (3a) towards the curved surface (3b). These spaces (10) and the gap (11) are designed to reduce weight and give an aesthetic appearance to the holder (1).

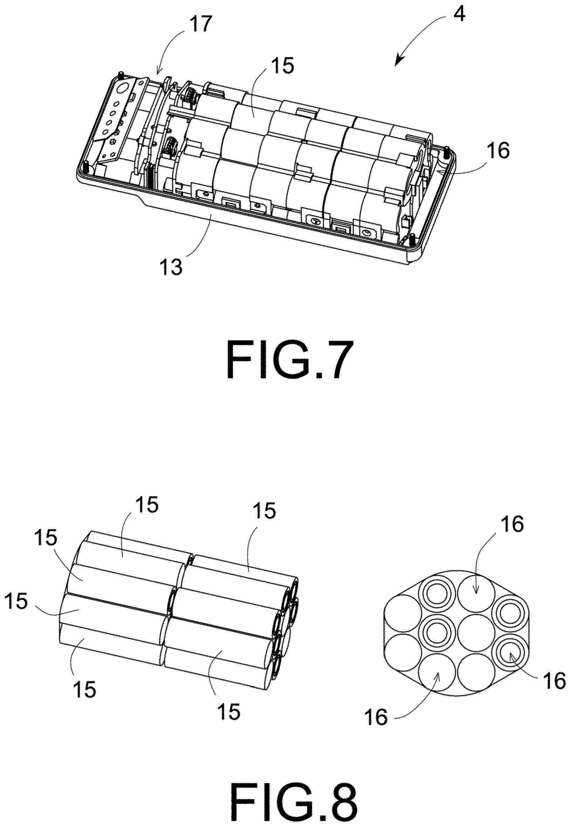

Additionally, the external battery (4) of the invention is intended to be housed in the cavity (5) of the holder (1) and comprises an internal configuration of cells (15) that make up a non-circular section compatible with the holder (1) of the invention as seen in Figure 1, without the need to use a specific holder for the external battery (4) or complex tools for installation. The internal configuration of cells (15) of the external battery (4) comprises twenty cells (15), forming ten longitudinal rows (16), placed partially forming an ellipse inside a casing (13), where each row (16) is formed of two cells (15) as shown in Figures 7 and 8. The ellipse formed by the cell (15) configuration has a small axis equal to the diameter of the water bottle (7) where the diameter of a bottle of water is normally between 68-76mm.

Furthermore, this configuration with twenty cells (15) provides the external battery (4) with a capacity of 250W/h, which means a capacity and autonomy superior to existing batteries intended to be inserted in known bottle holders.

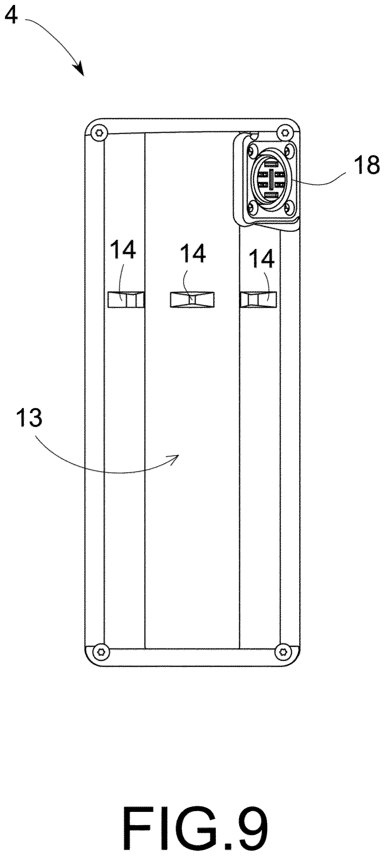

In Figure 7 it is also observed that the external battery (4) together with the internal configuration of cells (15) comprises a casing (13), an electronic part (17) and a connection system (18) to recharge the external battery (4) connecting it to the electrical network. The casing (13) is rigid and is intended to house inside the internal configuration of cells (15) and the electronic part (17) as shown in Figure 9. In this Figure 9, the casing (13) also comprises at least one notch (14) on the side intended to be placed against the holder (1). So that the notches (14) are placed on the protrusions (9) of the base (2) of the holder (1), to avoid longitudinal displacement of the external battery (4) in the holder (1) when the external battery (4) is inserted in the cavity (5) of the holder (1).

For all the above reasons, thanks to the holder (1) and the external battery (4) compatible with the holder (1) of the invention, there is no need to change the holder when you want to exchange the external battery (4) for the water bottle (7) or vice versa, saving changeover time and obtaining an external battery (4) with greater autonomy.

## Claims

1. System consisting of a bottle holder (1), a water bottle (7) and an external
battery (4) with a non-circular section larger than a section of the water bottle (7),
where the holder (1) comprises a longitudinal base (2) intended to be fitted on a tube of the frame of an electric bicycle and a main body (3) attached to the base (2),
where the base (2) and the main body (3) partially form a cavity (5) intended to house the water bottle (7) or the external battery (4),
where the holder (1) comprises an adjustment mechanism (6) to adjust the size of the cavity (5) so that it can accommodate the external battery (4),
where the cavity (5) comprises a space (5a) delimited between the main body (3) and the water bottle (7) when the water bottle (7) is inserted into the cavity (5) of the holder (1), and
where the space (5a) is at least partly occupied by the external battery (4) when the external battery (4) is inserted in the cavity (5),
**characterized in that**
the base (2) comprises a flat surface (2a), at least one inclined side surface (2b) extending from each side of the flat surface (2a), an upper surface (2c) extending perpendicularly from the flat and inclined side surfaces (2a, 2b) at an upper end (1a) and a lower surface (2d) extending perpendicularly from the flat and inclined side surfaces (2a, 2b) at a lower end (1b),
where the external battery (4) comprises an internal configuration of cells (15) that makes up the non-circular section,
where the internal configuration of cells (15) comprises twenty cells (15), forming ten longitudinal rows (16), placed partially forming an ellipse inside a casing (13),
where each row (16) is formed of two cells (15),
where the ellipse has a small axis equal to a diameter of the water bottle (7) which is between 68 and 76 mm.

2. System, according to claim 1, where the adjustment mechanism (6) comprises at least one flange (6a) on the base (2), at least one flange (6a) on the main body (3) and an elastic element (6b).

3. System, according to claim 1, where the main body (3) is a partially circular body that extends from one of the inclined side surfaces (2b) of the base (2) on a partly vertical surface (3a) to a free end (3c) at the end of a curved surface (3b).

4. System, according to claim 3, where the cavity (5) is partly delimited by the base (2) and the main body (3), where the free end (3c) of the main body (3) is located over the inclined side surface (2b) opposite the start of the main body (3).

5. System, according to the combination of claim 2 and claim 4, where at least one of said flanges (6a) on the main body (3) is located at the free end (3c) of the main body (3) and at least one of said flanges (6a) on the base (2) is located on the inclined side surface (2b) under the free end (3c).

6. System, according to claim 2, where the elastic element (6b) is placed around the flanges (6a), allowing the size of the cavity (5) to be adjusted.

7. System, according to claim 1, where the flat surface (2a) of the base (2) comprises projections (8) along an entire lower area of the flat surface (2a), intended to serve as supports on the tube of the frame of the electric bicycle.

8. System, according to claim 1, where the upper surface (2c) comprises at least one protrusion (9) on a free side, where the at least one protrusion (9) is intended to restrict the longitudinal movement of the external battery (4) or the water bottle (7).

9. System, according to claim 1, where the cells (15) provide the external battery (4) with a capacity of 250W/h.

10. System, according to claim 8, where the casing (13) comprises some notches (14) on the side intended to be placed against the holder (1), the notches (14) being placed on the at least one protrusion (9) to prevent longitudinal displacement of the external battery (4) inside the holder (1).

## Patentansprüche

1. System bestehend aus einem Flaschenhalter (1), einer Wasserflasche (7) und einer externen Batterie (4) mit einem nicht kreisförmigen Querschnitt, der größer ist als der Querschnitt der Wasserflasche (7),
wobei der Halter (1) einen länglichen Träger (2), der dazu bestimmt ist, an einem Rohr des Rahmens eines Elektrofahrrads angebracht zu werden, und einen an dem Träger (2) befestigten Hauptkörper (3) umfasst,
wobei der Träger (2) und der Hauptkörper (3) teilweise einen Hohlraum (5) bilden, der zur Aufnahme der Wasserflasche (7) oder der externen Batterie (4) bestimmt ist,
wobei der Halter (1) einen Einstellmechanismus (6) umfasst, um die Größe des Hohlraums (5) so einzustellen, dass er die externe Batterie (4) aufnehmen kann,
wobei der Hohlraum (5) einen Raum (5a) umfasst, der zwischen dem Hauptkörper (3) und der Wasserflasche (7) begrenzt ist, wenn die Wasserflasche (7) in den Hohlraum (5) des Halters (1) eingesetzt ist, und
wobei der Raum (5a) zumindest teilweise von der externen Batterie (4) belegt ist, wenn die externe Batterie (4) in den Hohlraum (5) eingesetzt ist,
**dadurch gekennzeichnet, dass**
der Träger (2) eine ebene Fläche (2a), mindestens eine geneigte Seitenfläche (2b), die sich von jeder Seite der ebenen Fläche (2a) erstreckt, eine Oberseite (2c), die sich senkrecht von den ebenen und geneigten Seitenflächen (2a, 2b) an einem oberen Ende (1a) erstreckt, und eine untere Fläche (2d), die sich senkrecht von den ebenen und geneigten Seitenflächen (2a, 2b) an einem unteren Ende (1b) erstreckt, umfasst,
wobei die externe Batterie (4) eine interne Konfiguration von Zellen (15) umfasst, die den nicht kreisförmigen Abschnitt bildet,
wobei die innere Konfiguration der Zellen (15) zwanzig Zellen (15) umfasst, die zehn Längsreihen (16) bilden, die teilweise eine Ellipse im Inneren eines Gehäuses (13) bilden,
wobei jede Reihe (16) aus zwei Zellen (15) gebildet wird,
wobei die Ellipse eine kleine Achse hat, die dem Durchmesser der Wasserflasche (7) entspricht, der zwischen 68 und 76 mm liegt.

2. System nach Anspruch 1, wobei der Einstellmechanismus (6) mindestens einen Flansch (6a) am Träger (2), mindestens einen Flansch (6a) am Hauptkörper (3) und ein elastisches Element (6b) umfasst.

3. System nach Anspruch 1, wobei der Hauptkörper (3) ein teilweise kreisförmiger Körper ist, der sich von einer der geneigten Seitenflächen (2b) des Trägers (2) auf einer teilweise vertikalen Fläche (3a) zu einem freien Ende (3c) am Ende einer gekrümmten Fläche (3b) erstreckt.

4. System nach Anspruch 3, wobei der Hohlraum (5) teilweise durch den Träger (2) und den Hauptkörper (3) begrenzt ist, wobei das freie Ende (3c) des Hauptkörpers (3) über der geneigten Seitenfläche (2b) gegenüber dem Beginn des Hauptkörpers (3) liegt.

5. System nach der Kombination von Anspruch 2 und Anspruch 4, wobei mindestens einer der Flansche (6a) am Hauptkörper (3) am freien Ende (3c) des Hauptkörpers (3) angeordnet ist und mindestens einer der besagten Flansche (6a) am Träger (2) an der geneigten Seitenfläche (2b) unter dem freien Ende (3c) angeordnet ist.

6. System nach Anspruch 2, bei dem das elastische Element (6b) um die Flansche (6a) herum angeordnet ist, wodurch die Größe des Hohlraums (5) angepasst werden kann.

7. System nach Anspruch 1, wobei die ebene Fläche (2a) des Trägers (2) entlang eines gesamten unteren Bereichs der ebenen Fläche (2a) Vorsprünge (8) umfasst, die dazu bestimmt sind, als Stützen auf dem Rohr des Rahmens des Elektrofahrrads zu dienen.

8. System nach Anspruch 1, wobei die Oberseite (2c) an einer freien Seite mindestens einen Überstand (9) umfasst, wobei der mindestens eine Überstand (9) dazu bestimmt ist, die Längsbewegung der externen Batterie (4) oder der Wasserflasche (7) zu begrenzen.

9. System nach Anspruch 1, wobei die Zellen (15) die externe Batterie (4) mit einer Kapazität von 250Wh versorgen.

10. System nach Anspruch 8, wobei das Gehäuse (13) auf der Seite, die dazu bestimmt ist, an dem Halter (1) anzuliegen, einige Kerben (14) umfasst, wobei die Kerben (14) auf dem mindestens einen Überstand (9) angeordnet sind, um eine Längsverschiebung der externen Batterie (4) im Inneren des Halters (1) zu verhindern.

## Revendications

1. Système consistant en un porte-bouteille (1), une bouteille d'eau (7) et une batterie externe (4) avec une section non circulaire plus grande qu'une section de la bouteille d'eau (7).
où le support (1) comprend une base longitudinale (2) conçue pour être installée sur un tube du cadre d'un vélo électrique et un corps principal (3) fixé à la base (2) où la base (2) et le corps principal (3) forment partiellement une cavité (5) conçue pour loger la bouteille d'eau (7) ou la batterie externe (4)
où le support (1) comprend un mécanisme de réglage (6) pour régler la taille de la cavité (5) de telle sorte qu'elle puisse accueillir la batterie externe (4),
où la cavité (5) comprend un espace (5a) délimité entre le corps principal (3) et la bouteille d'eau (7) où la bouteille d'eau (7) est insérée dans la cavité (5) du support (1) et où l'espace (5a) est au moins partiellement occupé par la batterie externe (4) lorsque la batterie externe (4) est insérée dans la cavité (5),
**caractérisé par le fait que**
la base (2) comprend une surface plate (2a), au moins une surface latérale inclinée (2b) s'étendant depuis chacun des côtés de la surface plate (2a), une surface supérieure (2c) s'étendant perpendiculairement à partir des surfaces latérales plates et inclinées (2a, 2b) à une extrémité supérieure (1a) et une surface inférieure (2d) s'étendant perpendiculairement à partir des ) latérales et inclinées surfaces plates (2a, 2b à une extrémité inférieure (1b)
où la batterie externe (4) comprend une disposition interne de cellules (15) qui créent la section non-circulaire,
où la disposition interne des cellules (15) comprend vingt cellules (15) formant dix rangées longitudinales (16), placées partiellement de manière à former une ellipse à l'intérieur d'un tubage (13),
où chaque rangée (16) est composée de deux cellules (15),
où l'ellipse a un petit axe égal au diamètre d'une bouteille d'eau (7), entre 68 et 76 mm.

2. Système, conformément à la revendication 1, où le mécanisme de réglage (6) comprend au moins une bride (6a) sur la base (2), au moins une bride (6a) sur le corps principal (3) et un élément élastique (6b).

3. Système, conformément à la revendication 1, où le corps principal (3) est un corps partiellement circulaire qui s'étend de l'une des surfaces latérales inclinées (2b) de la base (2) sur une surface partiellement verticale (3a) vers l'extrémité libre (3c) à l'extrémité d'une surface courbe (3b).

4. Système, conformément à la revendication 3, où la cavité (5) est partiellement délimitée par la base (2) et le corps principal (3), où l'extrémité libre (3c) du corps principal (3) est situé au-dessus de la surface inclinée latérale (2b) opposée au démarrage du corps principal (3).

5. Système, selon la combinaison des revendications 2 et 4, où au moins une desdites brides (6a) sur le corps principal (3) est située à l'extrémité libre (3c) du corps principal (3) et au moins une desdites brides (6a) sur la base (2) est située sur la surface latérale inclinée (2b) sous l'extrémité libre (3c).

6. Système, conformément à la revendication 2, où l'élément élastique (6b) est placé autour des brides (6a), permettant de régler la taille de la cavité (5).

7. Système, conformément à la revendication 1, où la surface plate (2a) de la base (2) comprend des saillies (8) tout le long d'une zone inférieure de la surface plate (2a), destinées à servir de supports sur le tube du cadre du vélo électrique.

8. Système, conformément à la revendication 1, où la surface supérieure (2c) comprend au moins une saillie (9) sur un côté libre, où au moins une saillie (9) est conçue pour restreindre le mouvement longitudinal de la batterie externe (4) ou de la bouteille d'eau (7).

9. Système conformément à la revendication 1, où les cellules (15) donnent à la batterie externe (4) une capacité de 250 W/h.

10. Système, conformément à la revendication 8, où le boîtier (13) comprend des encoches (14) sur le côté destiné à être placé contre le support (1), les encoches (14) étant placées sur au moins une saillie (9) pour empêcher le déplacement longitudinal de la batterie externe (4). à l'intérieur du support (1).
